# EUROPEAN PATENT SPECIFICATION

(11) **EP 3 016 823 B1**
(45) Date of publication and mention of the grant of the patent: **07.06.2017**
(21) Application number: 14820455.5
(22) Date of filing: 01.07.2014
(51) Int. Cl.: B60R 19/56, B60R 21/34

(54) **VEHICLE SAFETY DEVICE**
FAHRZEUGSICHERHEITSVORRICHTUNG
DISPOSITIF DE SÉCURITÉ POUR VÉHICULE

(30) Priority: 01.07.2013 SE 1350806
(43) Date of publication of application: 11.05.2016
(73) Proprietor: Thor, Jan, 660 50 Vålberg (SE); Olsson, Peter, 655 94 Karlstad (SE)
(72) Inventor: Thor, Jan, 660 50 Vålberg (SE); Olsson, Peter, 655 94 Karlstad (SE)
(74) Representative: Johansson, Lars E.
(86) International application number: PCT/IB2014/062764
(87) International publication number: WO 2015/001481

(56) References cited:
- WO-A1-2007/115572
- WO-A1-2007/115572
- GB-A- 190 228 324
- JP-A- 2005 161 960
- US-A- 1 408 362
- US-A- 4 763 939
- US-A- 4 877 266
- US-A- 4 877 266

## Description

### TECHNICAL FIELD

The present invention relates to a vehicle safety device, wherein the safety device is disposed along the longitudinal side of the vehicle and extends over substantially the entire area between the front and rear wheels of the vehicle and between the chassis of the vehicle and the ground.

### STATE OF THE ART

Being in the vicinity of vehicles, especially being near larger vehicles such as buses and trucks, always involves a risk. It can be especially dangerous when getting on or off buses, since crowding may occur and/or a person might slip or fall while the vehicle is still rolling and fall under the vehicle as a result. There have been a number of accidents when persons trying to catch, for example, a bus by running along the side of it, have slipped and been injured as a result, or in some cases have lost their lives. There are some previously known safety devices for different vehicles.

A safety shield, according to the preamble of the independent claim 1, extending along the side of the vehicle between the wheel pairs, is previously known from WO 2007/115572 A1. This safety shield comprises a flexible frame, consisting of at least two vertical frame parts and at least two horizontal frame parts, wherein the vertical frame parts are each connected to at least one spring and a canvas is disposed on the outer side of the safety shield.

A side guard, which is disposed between front and rear wheels, is previously known from JP 2005161960. An elastic member covers the space between the ground, rear and front wheel and has a rigidity against lateral forces in the horizontal direction and is elastically deformable against push-up forces from the road surface.

### BRIEF DESCRIPTION OF THE INVENTION

It is an object of the present invention to eliminate, or at least minimize, the above-mentioned problem, which is achieved by a safety device comprising a flexible side guard and stop elements and wherein the side guard extends over substantially the entire area between the front and rear wheels of the vehicle and between the chassis of the vehicle and the ground.

Thanks to the invention, a vehicle safety device is provided which prevents individuals or objects from running the risk of falling under the vehicle and being injured or run over by the vehicle.

According to one aspect of the invention, the flexible side guard of the safety device extends over substantially the entire area between the front and rear wheels of the vehicle and between the chassis of the vehicle and the ground, which together with stop elements prevents anyone/anything from ending up under the vehicle, at the same time as the flexible side guard makes it possible for the vehicle to drive over speed bumps or other obstacles on the road surface.

According to a further aspect of the invention, the stop elements are disposed on the inner side of the side guard, which means that should someone/something be pushed against the outer side of the side guard, they resist so that the side guard will not be allowed to deflect inwardly so that someone/something gets past the side guard and underneath the vehicle.

According to still another aspect of the invention, the safety device comprises a fixing device, preferably in the form of a L-beam, which means that it is possible to mount the safety device to the vehicle in an easy and rapid manner, and also that it is easy to mount both the side guard and the stop elements to the fixing device. Another advantage of using an L-beam is that the whole structure becomes stiffer.

According to a further aspect of the invention, the stop elements are constituted by springs, springs that are stable in the horizontal direction but compressible in the vertical direction, which provides the advantages that the springs serve as stop elements if something is pushed against the side guard from the outer side, but since they are compressible in the vertical direction, this enables the vehicle to drive over speed bumps or other bumps on the road surface. Thanks to the spring action, it is also possible for more modern buses to use their kneeling function, and to still be able to use the safety device according to the invention.

According to another aspect of the invention, the safety device extends between the front and rear wheels of the vehicle in such a way that the end of the safety device that is closest to the front wheel of the vehicle is centered behind said front wheel, and the safety device extends further rearward toward the rear wheel of the vehicle at an angle outwardly, so that the outer side of the side guard, at the end of the safety device that is closest to the rear wheel of the vehicle, extends edge to edge with the outer side of the rear wheel, this being a great advantage when someone/something bumps into the safety device when the vehicle is motion, since at the same time as being prevented from slipping down under the vehicle, it is pushed outwardly away from the vehicle so that it does not run the risk of ending up under the rear wheels of the vehicle.

According to a further aspect, said stop elements extend substantially vertically and are disposed with a distance therebetween, said distance being in the range of 5-20 cm, preferably in the range of 9-15 cm, and the fact that they extend in the vertical direction provides the advantage that they can be compressed in the vertical direction and thereby allow the vehicle to drive over uneven ground, at the same time as they are stable in the horizontal direction and prevent the side guard from being pushed inward under the vehicle, the fact that the stop elements are disposed with said distance therebetween provides a reliable resistance so as not to allow anybody/anything to be pushed under the vehicle.

### BRIEF DESCRIPTION OF FIGURES

In the following, the invention will be described in greater detail with reference to the accompanying figures of the drawings, in which:
- Fig. 1: shows a safety device according to the invention disposed on a vehicle;
- Fig. 2: shows a longitudinal section along the line I-I in Figure 1;
- Fig. 3: shows a perspective view obliquely from the front of a portion of a safety device according to the invention;
- Fig. 4: shows the inner side of a safety device according to the invention;
- Fig. 5: shows a close-up of a portion of the safety device according to the invention;
- Fig. 6: shows a perspective view obliquely from behind of a safety device according to the invention; and
- Fig. 7: shows, in detail, a short side of the invention in detail in a preferred design.

### DETAILED DESCRIPTION OF FIGURES

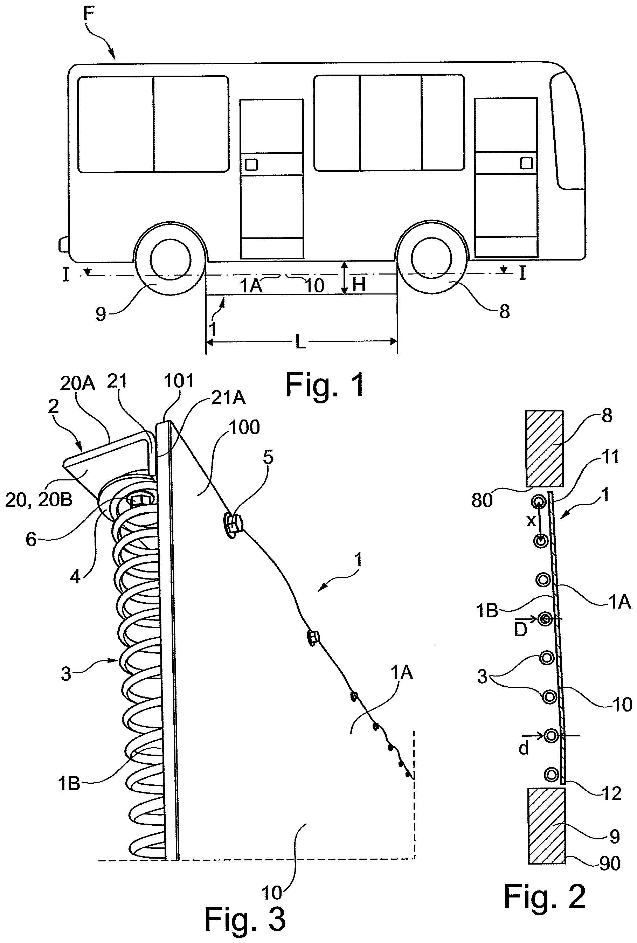

A safety device 1 according to the invention disposed on a vehicle F is schematically shown in Figure 1. In this case, the invention is exemplified by a bus, but it should be understood that the invention is not limited only to buses, but is also applicable to other vehicles, for example trucks and passenger cars. The safety device 1 extends along the side of the bus, between the front 8 and rear wheels 9 of the bus F. The safety device 1 further extends from the underside of the body and substantially all the way down to the ground. In other words, the safety device 1 occupies substantially the entire space between the lower edge, front 8 and rear wheels 9 of the bus F, and the ground. The safety device 1 has a length L in the range of 1-15 m, preferably of 3-10 m, and more preferably of 5-7 m. In the example described here, the safety device 1 has a length L of 6 m.

The safety device 1 is fitted to the frame/chassis of the bus F, for example by being screwed to a beam member on the bottom side of the bus F. As is seen in Figure 2, which is a longitudinal section along the line I-I in Figure 1, the safety device 1 is disposed such that it extends plough-formed between the front 8 and rear wheels 9 of the vehicle. A front end 11 of the safety device 1 is located immediately behind said front wheel 8 in the area behind a tread surface 80 of the front wheel 8. Preferably, it is centered behind the front wheel 8. The safety device 1 extends further rearward toward the rear wheel 9 of the bus at an angle outward (in the horizontal direction), so that a rear end 12 of the safety device 1 is located immediately in front of said rear wheel 9 aligned with, or outside of the outer tyre sidewall 90 of the rear wheel 9. At the rear end 12 of the safety device 1, the outer side 1A of the side guard extends edge to edge with, or outside of the outer side 90 of the rear wheel 9. A rear end 12 of the safety device 1 is located immediately in front of said rear wheel 9 aligned with, or outside of the outer tyre sidewall 90 of the rear wheel 9, so that the outer side 1A of the side guard at the rear end 12 of the safety device 1 extends edge to edge with, or outside of the outer side 90 of the rear wheel 9. Accordingly, the safety device 1 is disposed such that, should something bump into the safety device 1, the angle of the safety device 1 causes the object/person to be pushed outwardly, away from the bus F. A ploughing action is produced, which causes the individual/object bumping into the safety device 1 to be pushed outwardly, away from the bus, and to not run the risk of ending up under the rear wheels 9 of the bus. Another advantage of the plough-shaped design is that the safety device 1 operates in an area free of snow and slush, at least when the bus F is driven straight ahead, since the front wheel 8 clears the way.

Now follows a more detailed description of the safety device 1. A perspective view of one end of a safety device 1 according to the invention is seen in Figure 3. In a bus operated on roads with right-hand traffic, the bus guard is mounted on the right-hand side of the bus, since passengers are getting on and off the bus on that side, and consequently the end illustrated is the rear end of the bus guard. The safety device 1 comprises a fixing device 2, a side guard 10, and a number of stop elements 3. In the shown example, which is a preferred design, the fixing device 2 is constituted by an L-beam, the longer portion 20 of which constitutes a horizontal mounting portion for the mounting of the safety device 1 against the chassis of the bus and the mounting of the stop elements 3. The shorter portion 21 thereof constitutes a vertical mounting portion for the mounting of the side guard 10. The side guard is mounted on the outer side 21A of the vertical mounting portion, and the stop elements 3 are mounted inside of the inner side 21B of the vertical mounting portion. The attachment of the stop elements to the horizontal portion 20 of the L-beam is protected since they are located inside of the vertical mounting portion 21, and also the stop elements 3 are located inside of the side guard 10. The fixing device may also have another shape, e.g. be constituted by an angle beam, a U-beam or a square profile, but an L-beam is preferable, since one saves weight but achieves good stiffness.

The safety device 1 comprises a side guard 10 having an outer 1A and an inner 1B side, wherein the outer side 1A faces outwardly away from the vehicle F and the inner side 1B faces inwardly toward the frame of the bus. The side guard 10 preferably comprises a reinforced rubber mat, but there is also a possibility that it might consist of another material providing the characteristics necessary for the invention. Examples of a few different kinds of rubber mats which can be used follow below.
CL 20/2 1+0 2.7
TC 20/2 2+1 5.5
TC 25/2 3+1.5 7.0
TC 40/3 4+2 8.5
TC 40/3 6+2 10.5
TC 63/4 6+2 12.3
TC 63/4 8+3 15.3
EP 800/5 8+3 17.0
EP 800/5 10+4 20

In the rubber mats above, EP stands for polyester nylon, TC for trans-continental and CL for Conti Light, which indicate different types of mat. The first number combination after the type of mat, for example 20/2, indicates tensile strength/durability and number of fabric layers, the number 20 indicates the tensile strength measured in N/mm, and the number 2 indicates number of fabric layers. The next number combination, for example 4+2, stands for the amount of rubber on top of and beneath the fabric, respectively, in the example 4+2, there is accordingly 4 mm of rubber on top of and 2 mm of rubber beneath the fabric. The fact that there are different amounts of rubber on the two sides of the fabric is advantageous, since it provides the characteristic that the rubber will be stiffer in one direction, and this can advantageously be used in the invention. The last number after type of rubber indicates the thickness of the mat, in the examples above the mats have a thickness between 2.7-20 mm. The skilled person will appreciate that the examples above are suggestions to materials which can be used for the side guard, but it should be appreciated that also other materials can be used without taking away from the inventive concept for that reason.

The side guard 10 has a flexural stiffness which causes the side guard 10 to maintain a substantially flat outer side when an individual, or a loose object having a maximum weight equal to the weight of a grown-up person, pushes the side guard 10 inwardly, against the stop elements 3. Suitably, the side guard 10 has a flexural stiffness so as to withstand a load from a person with a weight of 150 kg, more preferably of 200 kg, between two consecutive stop elements 3. It is appreciated, however, that more than a pair of stop elements 3 interact when a person is pushed away by the side guard, for which reason the side guard and a pair of underlying stop elements 3 only have to withstand a fraction of this weight, approximately from one-fifth to one-tenth of the weight. Irrespective of this, the force exerted upon the side guard by an individual or an object who/which has fallen should not be able to deflect the side guard 10 inwardly in the area between two adjacent stop elements 3, or at least not be able to significantly deflect the side guard 10 inwardly. It is appreciated that the distance between the stop elements 3 has to be adapted to the flexural stiffness of the side guard 10. In this way, the risk of folds or irregularities in the side guard potentially injuring an individual being pushed away by the side guard 10 is eliminated or at least minimized, and the risk of an individual or a loose object getting stuck and being dragged along is eliminated or at least minimized. However, the side guard 10 should be sufficiently flexible to be capable of deflecting laterally when the bus F, for example, drives over a speed bump or the like, for which reason the skilled person will appreciate that the distance between the stop elements 3 has to be adapted to the flexural stiffness of the side guard 10. Likewise, it is appreciated that the stop elements 3 may have certain flexibility in the lateral direction, but not to a greater extent than allowing the object of the invention to be achieved.

As mentioned previously, the safety device 1 occupies substantially the entire space between the frame F, front 8 and rear wheels 9 of the bus F, and the ground. This space may vary in size depending on the make and model of vehicle and the skilled person will appreciate that the specified dimensions in the description hereinbelow only constitute examples and by no means should limit the scope of protection, if not indicated otherwise.

The side guard 10 has a length L corresponding to the length L of the safety device 1, which in its turn has a length which has been adapted to the distance between front and rear wheels, or more correctly the distance between rear edge of front wheel housing and front edge of rear wheel housing. The length L is in the range of 1-15 m, preferably of 3-10 m, and more preferably of 5-7 m. In the example described here, the side guard 10 has a length L of 6 m, which has been adapted to a distance 1 of 6 m between front and rear wheel housing. The side guard 10 also has a height H which has been adapted to a height h between the side member of the bus and the ground (see Figure 1). The height H is in the range of 5-100 cm, more preferably in the range of 10-70 cm, and most preferably of 15-25 cm. In the described example, the side guard 10 has a height of 22 cm, which has been adapted to a height h of 22-27 cm between the side member of the bus and the ground. To avoid unnecessary wear on the side guard 10, the side guard 10 preferably has a height H that causes the lower edge 13 of the side guard not to reach all the way to the ground, but to terminate slightly above, typically 1-5 cm above the ground when the bus F is driven on the road. The side guard can be allowed to reach the ground in connection with driving over a bump in the road, or in connection with the bus kneeling down to let passengers off or on. To minimize the wear in these situations, the flexural stiffness of the side guard has been adapted so that the side guard can deflect laterally. The side guard 10 has a thickness T in the range of 0.3-3 cm, more preferably of 0.5-2 cm, and most preferably of 0.6-1.5 cm. In the described example, the side guard 10 has a thickness T of 8 mm. The outer side 1A of the side guard faces away from the bus F, whereas the inner side 1B faces inwardly toward the bottom side of the bus F.

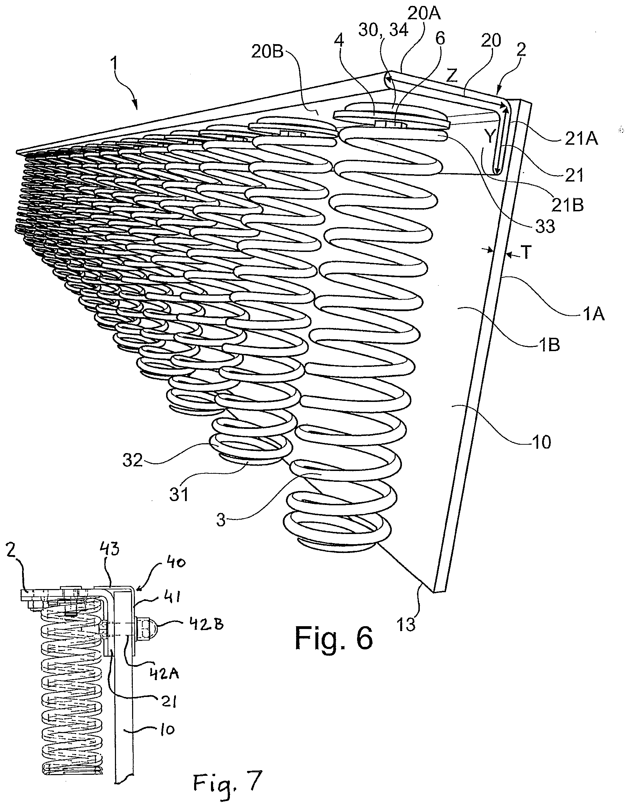

A fixing device 2, preferably in the form of an L-beam 2, is disposed on the inner side 1B along the upper portion 100 of the side guard. The shorter portion 21 is disposed vertically downward and constitutes a mounting portion 21 for the mounting of the side guard 10. The upper portion 100 of the inner side 1B of the side guard is fixed against the outer side of this vertically downward pointing mounting portion 21 of the L-beam 2 by means of fixing means 5. The fixing means 5 are screws in the described example, but it is appreciated that the side guard 10 also can be attached to the L-beam 2 in other ways, e.g. fixed by riveting. The longer portion 20 of the L-beam is disposed horizontally and constitutes a mounting portion 20 for the mounting of the safety device 1 against the frame of the bus. The outer side of this horizontal mounting portion 20 is placed against the frame of the bus and is mounted by e.g. bolts. For this purpose, the horizontal mounting portion is provided with mounting means, preferably a plurality of evenly distributed, preferably elongated, holes for easy mounting by screws to the frame of the bus. An optional number of suitable holes can be used when mounting, and the majority of the holes will probably not need to be used, but will in that case only serve as weight reducing recesses in the beam member. It is also conceivable that the side guard 10 is shaped around the edge connecting the two different portions 20, 21 of the L-beam 2, and the upper portion of the side guard 10 will then end up between the horizontal mounting portion 20 of the L-beam and the frame of the bus F, and in that way the side guard 10 is fixed when the L-beam 2 is mounted to the bus F. The L-beam 2 is preferably disposed such that the horizontal mounting portion 20 of the L-beam extends on a level with the upper edge 101 of the side guard, so that they extend in the same plane. The L-beam 2 is preferably made of aluminium, but can of course also be made of other materials, such as other light metals, composite materials, or steel. The vertical mounting portion 21 of the L-beam has a length Y (see Figure 6) in the range of 1-10 cm, more preferably of 1.5-8 cm, and most preferably of 2-4 cm. In the described example, the vertical mounting portion 21 has a length Y of 3 cm. The horizontal mounting portion 20 of the L-beam has a length Z (see Figure 6) in the range of 2-20 cm, more preferably of 3-15 cm, and most preferably of 4-10 cm. In the described example, the horizontal mounting portion 20 has a length Z of 6 cm. Advantages of using a L-beam as a fixing device are that a L-beam makes the whole structure stiffer, there is a good bearing capacity between the points of attachment on the vehicle, and it is also a suitable structure for the mounting of springs 3 and the side guard 10.

A preferred design of the safety device is shown in Figure 7, where a short side is shown in detail. Angle bars 40 are disposed externally of the L-beam 2 so that a nip is formed between the vertically downward pointing mounting portion 21 of the L-beam and a likewise vertically downward pointing retaining portion 41 of the angle bar 40. The upper portion of the side guard 10 is disposed in this nip and the angle bar 40 is fixed to the vertically downward pointing mounting portion 21 of the L-beam by a through screw and a nut 42A, 42B, wherein the screw 42A also extends through the side guard 10. Of course, other suitable fixing means are conceivable, e.g. pop rivets, glue.

Most advantageously, angle bars are disposed along the entire upper edge of the L-beam, because the side guard will be more reliably held under the action of clamping force from the angle bar 40 against the L-beam 2 in that way than with a point-attachment with only screw and nut, but a design with angle bars as a reinforcement only near the points of attachment of screw and nut 42A, 42B is also conceivable and offers advantages compared to a design without any angle bars. The use of angle bars 40 also makes the side guard more stable (in which direction? or both?). The horizontal portion 43 of the angle bar surrounds the upper end of the side guard and extends a distance over the horizontal mounting portion 20 of the L-beam, which provides stability to the structure (other advantages?).

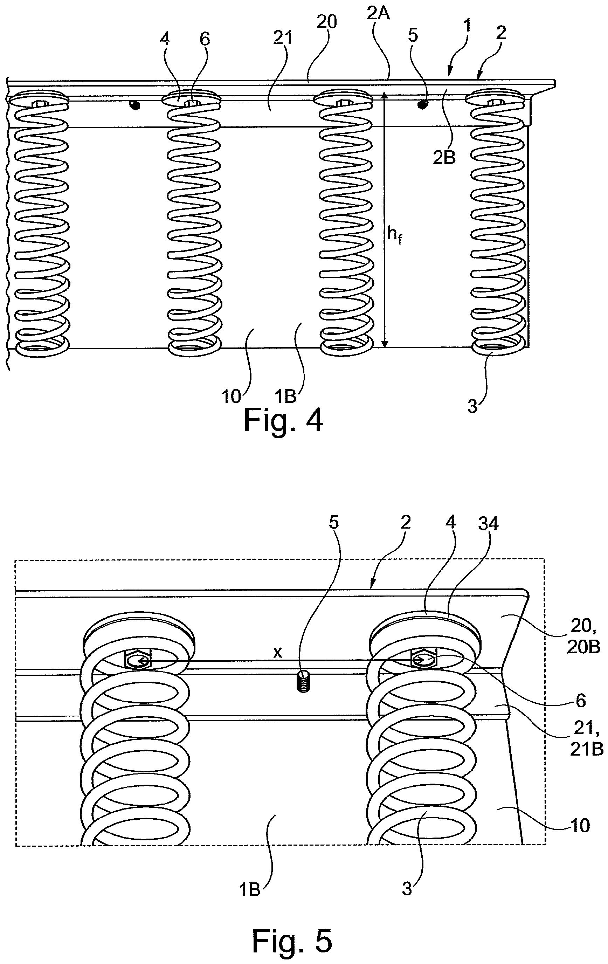

A portion of the inner side of the safety device 1 is seen in Figure 4, said side facing inwardly toward the frame of the bus in a mounted condition. Stop elements 3, in the described example in the form of cylindrical helical springs 3, are disposed on the horizontal mounting portion 20 of the L-beam. The springs 3 are disposed on the bottom side 20B of the horizontal mounting portion 20 and extend downwardly along the inside 1B of the side guard so that the outer side of the helical wire abuts against the inside 1B of the side guard or is only at a short distance therefrom, typically 1-5 cm. In the described example, the springs 3 extend substantially vertically, but also the case where the springs may have an inclination relative to a vertical plane is accommodated by the inventive concept. One example could be if the chassis has a different construction so that the springs have to be mounted at a fixed angle relative to a vertical plane, angled away from the chassis outwardly toward the side guard, so that they abut against the side guard and can resist in case something/someone bumps into the side guard. In such a design, it is preferred that the spring 3 has an inclination of no more than 45°, but more preferably of no more than 30° relative to a vertical plane. In this way, it is made easier for the springs to be compressed in the longitudinal direction instead of deflecting laterally, which can be an advantage, inter alia, with respect to wear, in those cases where the side guard is mounted on a bus with kneeling function or which runs on a road section with many speed bumps or the like. The springs are disposed with a distance X therebetween (see Figure 5), said distance X being in the range of 5-20 cm, and more preferably of 9-15 cm. The distance has been adapted to ensure that an individual cannot be accommodated in the space between two springs, thus being a further safety aspect in addition to the stopping action of the side guard and the springs. In this described example, the springs are spaced at a distance X of 12 cm. The springs 3 have a height h_{f} in an "equilibrium position", which, like for the side guard 10, has been adapted to a height h between the side member of the bus and the ground, so that they stay clear of contact with the ground during normal forward driving. The height h_{f} of the springs is in the range of 5-100 cm, more preferably in the range of 10-70 cm, and most preferably of 15-25 cm. In the described example, the springs 3 have a height h_{f} of 21 cm, which means that they have a ground clearance of the order of 1-6 cm.

Preferably, the height H of the side guard is slightly greater than the height h_{f} of the spring, which provides a greater ground clearance for the springs than for the side guard with the purpose, inter alia, of minimizing unnecessary wear and noise. The springs 3 preferably have a maximum distance from the ground in the range of 1-15 cm. The spring constant of the springs 3 should be dimensioned such that the springs are stable in the lateral direction (horizontal direction), but compressible in the longitudinal direction (vertical direction). In this way, it is possible for the bus F to drive on uneven ground, such as over a speed bump, since in that case the springs 3 are compressed in the longitudinal direction, at the same time as the springs are not deflected laterally, at least not to a greater extent than allowing them to maintain their stopping action on the side guard 10, which is thereby capable of pushing away an individual or a loose object through force exerted by the springs 3 and preventing it from falling under the bus. More modern buses have a kneeling function which makes it easier to step off and on the bus, and owing to the fact that the springs 3 are compressible in the longitudinal direction they are no obstacles for the bus with the kneeling function. Thanks to the fact that the springs 3 are stable in the lateral direction, nobody/nothing is allowed to fall under the bus F, since the springs 3, which are disposed on the inner side 1B of the side guard 10, cooperate and restrain the object being pushed against the side guard 10 from the outside so that the side guard 10 withstands the force. The person/object is transported alongside the side guard 10, and owing to the angled mounting, the person/object is also pushed outward laterally. Since the rear end of the safety device 1 is located immediately in front of the rear wheel 9 and aligned with the outer tyre sidewall 90 of the rear wheel 9, or even slightly outside thereof, the person/object is prevented from being run over by the rear wheel 9.

The upper end 34, and preferably also the lower end 31, is/are ground flat in a way known to the skilled person. This means that the pitch of the last turn of the spring helix has been minimized, and that the terminating end of the spring wire has been ground to form a flat surface that is substantially transverse to the centre axis of the helical spring. This allows the spring to be mounted via its upper end 34 perpendicularly to the bottom side 20B of the horizontal mounting portion 20 on the L-beam. At the lower end 31, the end 31 is prevented from getting stuck on something. When attaching the spring 3 to the L-beam 2, the first turn 30 of the spring preferably abuts against the bottom side 20B of the horizontal mounting portion 20 of the L-beam, and a washer 4 is disposed between the first 30 and second 33 turns of the spring (see Figure 6) to thus forcibly urge the spring against the L-beam 2 when it is attached by means of attachment means 6, for example screws. It is also conceivable to use a contoured and possibly also punched washer 4 known to the skilled person so that the first turn of the spring is disposed in a recess in the washer such that the spring is positioned centrally relative to the washer and that the spring is held more firmly between the washer and the beam member.

The springs 3 are preferably fitted to the L-beam 2 in such a way that it is possible to replace them if they get worn out or break. The springs 3 preferably have a shoe/protector (not shown) fitted at the lower end thereof to thus protect the spring 3 from impacts/wear. This shoe/protector is advantageously replaceable, so that it easily can be removed when worn out and a new one can be fitted, which would thus save wear on the springs 3. Another advantage of having a shoe/protector fitted to the lower end of the spring 3 is that it would reduce the noise that may arise when the springs 3 contact the ground, for example when the bus F drives over a speed bump. Said shoe/protector is preferably made of metal, plastic, rubber, nylon or other wear resistant material that withstands contact with the support without wearing down too quickly. In the described example, the spring 3 has wire diameter D of 5 mm (see Figure 2) and a pitch of 15.9 mm per each spring turn, a spring height H_{f} of 21 cm and an outer diameter d of 45 mm, which provide the desired stiffness of the spring 3 in the horizontal direction. In case a shorter or longer spring height H_{f} is preferred, there is some allowance when the spring 3 has the above-mentioned dimensions. When the height H_{f} of the spring is made approx. ± 5 cm with the above-mentioned dimensions, the stiffness of the spring is not influenced to any significant extent. In case it is desired to make the spring 3 more than 5 cm longer, the spring 3 is made of a thicker material, in other words with a larger wire diameter D, but otherwise having the same dimensions, in order to achieve the same stiffness as in the described example. In case it would be desirable to make the spring 3 more than 5 cm shorter than the above-described spring 3, the spring 3 becomes substantially stiffer, which could then be compensated by a thinner side guard 10, alternatively by reducing the wire diameter D. Another aspect is that the thicker the wire diameter D and the smaller the pitch of the spring 3 are, the greater an intrinsic weight the spring 3 will have, and thus also a reduced motion speed, which causes the spring 3 to respond more slowly to the movement of the side guard 10.

The invention is not limited by what has been described hereinabove, but can be varied within the scope of the following claims.

For instance, it is appreciated that the above-specified measurements/dimensions are by no means limiting for the invention, but that they may vary completely depending on the material which is used in the different constituent parts of the safety device and depending on the kind of vehicle the safety device is to be fitted on. If, for example, the safety device is to be fitted to a city bus driving over a large number of speed bumps, it may be an advantage to have slightly shorter springs 3 in order to avoid excessive wear on them. It is also appreciated that the safety device can be dimensioned so as to withstand horizontal forces from several individuals, at least to the extent that it is not deflected away by the lateral forces arising when one individual is pushed away by one part of the safety device, e.g. the front portion, and another individual simultaneously is pushed away by another part of the safety device, e.g. the middle or rear portion. Preferably, the side guard 10 should also have sufficient stiffness in the horizontal direction between each pair of springs in order to maintain a flat, or substantially flat surface in such a situation.

It is also possible to vary the thickness of the side guard 10 according to the stiffness of the spring in the horizontal direction, so that these together will achieve the desired action/resistance. The distance X between the springs can be varied along the side guard. In the area closest to the rear wheel 90 of the vehicle, the springs can be mounted closer together in order to increase the stability of the safety device in the horizontal direction. Within the scope of the inventive concept, it is also possible that the side guard 10 comprises a plurality of side guards 10 disposed adjacent to each other, preferably in an overlapping manner, so that the side guard 10 that is closest to the front wheel 8 is stacked on top of the next side guard 10 so than no one/nothing runs the risk of slipping in between the side guards. If the side guard is disposed, for example, below a door on the vehicle, it is of course possible to make a recess in the safety device so as not to interfere with the door/foot step.

In the foregoing, it is described that the safety device is disposed directly on a beam member of the frame/chassis of the vehicle, but it is also possible to use distance pieces between vehicle and safety device, should this be needed or facilitate the mounting. With regard to the attachment of the side guard, an alternative method is that the fixing device is provided with a slotted profile into which the side guard can be slid from one short side of the fixing device.

Even though it is preferred to use springs as stop elements, it is possible to use, for example, rubber bars, alternatively some form of hydraulic or pneumatic pistons. If using such devices, it is worth taking into account that it may become problematic with their flexibility in the horizontal direction and also that salt, slush, etc. may cause mechanical problems. Some kind of articulated joint at the attachment to the fixing device may be needed, but the skilled person will appreciate that this joint has to be adapted so as not to be released by the lateral forces caused by an individual or an object bumping into the side guard, but only in case of stationary objects.

Instead of fixing each stop element separately by screws to the fixing device, it is possible, for example, to provide grooves in a flat bar, into which the upper portion of the stop elements can be slid, and then the entire flat bar with stop elements is mounted to the fixing device, so that a smaller number of screws is needed for a certain number of stop elements. When replacing one or several stop elements, the entire flat bar is screwed loose and the stop elements in question are replaced, before the flat bar with the stop elements is once again mounted to the fixing device.

In the foregoing description, reference is made to the safety device being mounted on an already existing vehicle. The inventive concept also includes that the fixing device may be provided already during the manufacture of a vehicle, so that only side guard and stop elements are mounted to the vehicle later. During the manufacture, the chassis of the vehicle can be directly provided with a fixing device 2, preferably in the form of an L-beam, said fixing device 2 comprising a horizontal mounting portion 20 for the mounting of the stop elements 3 and a vertical mounting portion 21 for the mounting of the side guard 10.

## Claims

1. A vehicle (F) safety device (1) comprising a flexible side guard (10), extending over substantially the entire area between the front (8) and rear wheels (9) of the vehicle (F) and between the chassis of the vehicle and the ground, further comprising a plurality of substantially vertically disposed stop elements (3) internally of said side guard (10), **characterized in that** said stop elements (3) comprise spring elements (3), which are compressible in the longitudinal direction and stiff in the lateral direction, and that said side guard (10) comprises a mat of flexible material having a flexural stiffness allowing the side guard to deflect laterally to create space in the vertical direction when the vehicle drives over a stationary obstacle, wherein a mutual distance (X) between said spring elements (3) and the flexural stiffness of said side guard (10) are adapted to each other such that the side guard (10) is adapted to maintain a flat, or a substantially flat, outer side in the area between two adjacent spring elements (3) when an individual who has fallen or a loose object of equal weight exerts a force directed inwardly toward the stop elements (3) upon the side guard (10) in said area.

2. The safety device according to claim 1, **characterized in that** said side guard (10) has an outer side (1A) and an inner side (1B), wherein the outer side (1A) faces away from the vehicle (F), whereas the inner side (1B) faces inwardly toward the bottom side of the vehicle (F), and that an outer side of said spring elements (3) abuts against or is at a short distance, typically 1-5 cm, from the inner side (1B) of the side guard.

3. The safety device according to claim 1, **characterized in that** the mutual distance (X) between said spring elements (3) is in the range of 5-20 cm, more preferably of 9-15 cm.

4. The safety device according to claim 3, **characterized in that** the height (h_{f}) of the spring elements (3) is in the range of 5-100 cm, more preferably of 10-70 cm, and most preferably of 15-25 cm.

5. The safety device according to claim 2, **characterized in that** said side guard (10) is a reinforced rubber mat having a thickness (T) in the range of 0.3-3 cm, more preferably of 0.5-2 cm, and most preferably of 0.6-1.5 cm.

6. The safety device according to claim 1, **characterized in that** said side guard (10) and spring elements (3) are fitted to the chassis of the vehicle (F), wherein said chassis comprises a fixing device (2), preferably in the form of a L-beam, said fixing device (2) comprising a horizontal mounting portion (20) for the mounting of the spring elements (3) and a vertical mounting portion (21) for the mounting of the side guard (10).

7. The safety device according to claim 1, **characterized in that** the safety device (1) comprises a fixing device (2), preferably in the form of a L-beam, which is adapted for attaching the safety device (1) to/on the vehicle (F), said fixing device (2) comprising a horizontal mounting portion (20) for the mounting of the safety device (1) against the chassis of the vehicle and the mounting of the spring elements (3), and a vertical mounting portion (21) for the mounting of the side guard (10).

8. The safety device according to claim 6 or 7, **characterized in that** the side guard (10) is mounted on the outer side (21A) of the vertical mounting portion, the spring elements (3) are mounted on the bottom side (20B) of the horizontal portion inside of the vertical mounting portion (21), wherein the attachment (30, 6, 4) of the spring elements to the bottom side (20B) of the horizontal portion is protected inside of the vertical mounting portion (21).

9. The safety device according to claim 1, **characterized in that** said spring elements (3) are replaceable.

10. The safety device according to claim 6 or 7, **characterized in that** said spring elements (3) are constituted by helical springs (3), the upper ends (34) of which are mounted to the bottom side (20B) of the horizontal mounting portion by mounting means (4, 6).

11. The safety device according to claim 10, **characterized in that** the upper end (34) of said helical spring, and preferably also the lower end (31) thereof, is/are ground flat, that said mounting means (4, 6) comprise a washer (4) that is disposed between the first turn (30) and the second turn (33) of the helical spring, said washer (4) being fixed to the bottom side (20B) of the horizontal mounting portion by a screw (6).

12. The safety device according to claim 2, **characterized in that** the safety device (1) extends plough-formed between the front (8) and rear wheels (9) of the vehicle, that a front end (11) of the safety device (1) is located immediately behind said front wheel (8) in the area behind a tread surface (80) of the front wheel (8), that a rear end (12) of the safety device (1) is located immediately in front of said rear wheel (9) aligned with or outside of the outer tyre sidewall (90) of the rear wheel (9) so that the outer side (1A) of the side guard, at the rear end (12) of the safety device (1), extends edge to edge with or outside of the outer tyre sidewall (90) of the rear wheel (9).

13. The safety device according to claim 1, **characterized in that** a lower edge (13) of said side guard (10) is disposed at a distance from the ground in the range of 1-5 cm and/or that a lower end (31) of said spring element (3) is disposed at a distance from the ground in the range of 1-15 cm.

## Patentansprüche

1. Fahrzeug (F)-Sicherheitsvorrichtung (1) umfassend einen flexiblen Seitenschutz (10), der sich im Wesentlichen über den gesamten Bereich zwischen den Vorder- (8) und Hinterrädern (9) des Fahrzeugs (F) und zwischen dem Fahrgestell des Fahrzeugs und dem Boden erstreckt, weiterhin umfassend mehrere im Wesentlichen vertikal angeordnete Anschlagelemente (3), im Inneren des Seitenschutzes (10),
**dadurch gekennzeichnet, dass** die Anschlagelemente (3) Federelemente (3) umfassen, welche in der Längsrichtung zusammendrückbar und in der Querrichtung steif sind, und dass der Seitenschutz (10) eine Matte aus flexiblen Material umfasst, mit einer Biegesteifigkeit, die es dem Seitenschutz erlaubt quer ausgelenkt zu werden, um Raum in der vertikalen Richtung zu schaffen, wenn das Fahrzeug über ein stationäres Hindernis fährt, wobei ein gegenseitiger Abstand (X) zwischen den Federelementen (3) und die Biegesteifigkeit des Seitenschutzes (10) aneinander angepasst sind, so dass der Seitenschutz (10) angepasst ist, eine flache, oder eine im Wesentlichen flache, äußere Seite in dem Bereich zwischen zwei benachbarten Federelementen (3) beizubehalten, wenn eine Person, die gefallen ist, oder ein loses Objekt gleichen Gewichts eine nach innen auf die Anschlagelemente (3) zu gerichtete Kraft auf den Seitenschutz (10) in dem Bereich ausübt.

2. Sicherheitsvorrichtung gemäß Anspruch 1, **dadurch gekennzeichnet, dass** der Seitenschutz (10) eine äußere Seite (1A) und eine innere Seite (1B) aufweist, wobei die äußere Seite (1A) von dem Fahrzeug (F) abgewandt ist, während die innere Seite (1B) nach innen auf die untere Seite des Fahrzeugs (F) zu gewandt ist, und dass eine äußere Seite der Federelemente (3) an der inneren Seite (1B) des Seitenschutzes anliegt oder sich in einem kleinen Abstand, typischerweise 1-5 cm, davon befindet.

3. Sicherheitsvorrichtung gemäß Anspruch 1, **dadurch gekennzeichnet, dass** der gegenseitige Abstand (X) zwischen den Federelementen (3) in dem Intervall von 5-20 cm, mehr bevorzugt 9-15cm, liegt.

4. Sicherheitsvorrichtung gemäß Anspruch 3, **dadurch gekennzeichnet, dass** die Höhe (h_{f}) der Federelemente (3) in dem Intervall von 5-100 cm, mehr bevorzugt von 10-70 cm, und am meisten bevorzugt von 15-25 cm, liegt.

5. Sicherheitsvorrichtung gemäß Anspruch 2, **dadurch gekennzeichnet, dass** der Seitenschutz (10) eine verstärkte Gummimatte ist, mit einer Dicke (T) in dem Intervall von 0,3-3 cm, mehr bevorzugt von 0,5-2 cm , und am meisten bevorzugt von 0,6-1,5 cm.

6. Sicherheitsvorrichtung gemäß Anspruch 1, **dadurch gekennzeichnet, dass** der Seitenschutz (10) und die Federelemente (3) an das Fahrgestell des Fahrzeugs (F) angebaut sind, wobei das Fahrgestell eine Fixiervorrichtung (2) umfasst, bevorzugt in der Form eines L-Trägers, wobei die Fixiervorrichtung (2) einen horizontalen Befestigungsabschnitt (20) für die Befestigung der Federelemente (3) und einen vertikalen Befestigungsabschnitt (21) für die Befestigung des Seitenschutzes (10) umfasst.

7. Sicherheitsvorrichtung gemäß Anspruch 1, **dadurch gekennzeichnet, dass** die Sicherheitsvorrichtung (1) eine Fixiervorrichtung (2) umfasst, bevorzugt in der Form eines L-Trägers, welche angepasst ist, die Sicherheitsvorrichtung (1) an/auf dem Fahrzeug (F) anzubringen, wobei die Fixiervorrichtung (2) einen horizontalen Befestigungsabschnitt (20) für die Befestigung der Sicherheitsvorrichtung (1) an dem Fahrgestell des Fahrzeugs und die Befestigung der Federelemente (3) und einen vertikalen Befestigungsabschnitt (21) für die Befestigung des Seitenschutzes (10) umfasst.

8. Sicherheitsvorrichtung gemäß Anspruch 6 oder 7, **dadurch gekennzeichnet, dass** der Seitenschutz (10) an der äußeren Seite (21A) des vertikalen Befestigungsabschnitts befestigt ist, die Federelemente (3) an der unteren Seite (20B) des horizontalen Abschnitts innerhalb des vertikalen Befestigungsabschnitts (21) befestigt sind, wobei die Anbringung (30, 6, 4) der Federelemente an der unteren Seite (20B) des horizontalen Abschnitts innerhalb des vertikalen Befestigungsabschnitts (21) geschützt ist.

9. Sicherheitsvorrichtung gemäß Anspruch 1, **dadurch gekennzeichnet, dass** die Federelemente (3) austauschbar sind.

10. Sicherheitsvorrichtung gemäß Anspruch 6 oder 7, **dadurch gekennzeichnet, dass** die Federelemente (3) durch Schraubenfedern (3) gebildet sind, deren obere Enden (34) durch Befestigungsmittel (4, 6) an der unteren Seite (20B) des horizontalen Befestigungsabschnitts befestigt sind.

11. Sicherheitsvorrichtung gemäß Anspruch 10, **dadurch gekennzeichnet, dass** das obere Ende (34) der Schraubenfeder, und bevorzugt auch das niedrigere Ende (31) davon, flachgeschliffen ist/sind, dass die Befestigungsmittel (4, 6) eine Unterlegscheibe (4) umfassen, die zwischen der ersten Windung (30) und der zweiten Windung (33) der Schraubenfeder angeordnet ist, wobei die Unterlegscheibe (4) durch eine Schraube (6) an der unteren Seite (20B) des horizontalen Befestigungsabschnitts fixiert ist.

12. Sicherheitsvorrichtung gemäß Anspruch 2, **dadurch gekennzeichnet, dass** die Sicherheitsvorrichtung (1) sich pflugförmig zwischen den Vorder- (8) und Hinterrädern (9) des Fahrzeugs erstreckt, dass sich ein vorderes Ende (11) der Sicherheitsvorrichtung (1) unmittelbar hinter dem Vorderrad (8) in dem Bereich hinter einer Laufflächenoberfläche (80) des Vorderrads (8) befindet, dass sich ein hinteres Ende (12) der Sicherheitsvorrichtung (1) unmittelbar vor dem Hinterrad (9) befindet, ausgerichtet mit oder außerhalb der äußeren Reifenseitenwand (90) des Hinterrads (9), so dass sich die äußere Seite (1A) des Seitenschutzes, an dem hinteren Ende (12) der Sicherheitsvorrichtung (1), Kante zu Kante mit oder außerhalb der äußeren Reifenseitenwand (90) des Hinterrads (9) erstreckt.

13. Sicherheitsvorrichtung gemäß Anspruch 1, **dadurch gekennzeichnet, dass** eine niedrigere Kante (13) des Seitenschutzes (10) in einem Abstand von dem Boden in dem Intervall von 1-5 cm angeordnet ist, und/oder dass ein niedrigeres Ende (31) des Federelements (3) in einem Abstand von dem Boden in dem Intervall von 1-15 cm angeordnet ist.

## Revendications

1. Un dispositif de sécurité (1) de véhicule (F) comprenant une protection latérale (10) flexible s'étendant sur sensiblement toute la zone située entre les roues avant (8) et arrière (9) du véhicule (F) et entre le châssis du véhicule et le sol, comprenant en outre une pluralité d'éléments d'arrêt (3) disposés sensiblement verticalement à l'intérieur de ladite protection latérale (10), **caractérisé en ce que** lesdits éléments d'arrêt (3) comprennent des éléments à ressort (3) qui sont compressibles dans la direction longitudinale et rigides dans la direction latérale, et **en ce que** ladite protection latérale (10) comprend un panneau de matériau flexible ayant une rigidité en flexion permettant à la protection latérale de se défléchir latéralement de façon à créer un espace dans la direction verticale lorsque le véhicule passe sur un obstacle stationnaire, une distance mutuelle (X) entre lesdits éléments à ressort (3), et la rigidité en flexion de ladite protection latérale (10), étant adaptées l'une à l'autre de sorte que la protection latérale (10) est adaptée pour maintenir une surface extérieure plane ou sensiblement plane dans la zone située entre deux éléments à ressort (3) adjacents lorsqu'un individu qui est tombé ou qu'un objet libre de poids égal exerce une force dirigée vers l'intérieur en direction des éléments d'arrêt (3) sur la protection latérale (10) dans ladite zone.

2. Le dispositif de sécurité selon la revendication 1, **caractérisé en ce que** ladite protection latérale (10) a un côté extérieur (1A) et un côté intérieur (1B), le côté extérieur (1A) étant orienté du côté opposé au véhicule (F) tandis que le côté intérieur (1B) est orienté vers l'intérieur en direction du côté inférieur du véhicule (F), et **en ce qu'**un côté extérieur desdits éléments à ressort (3) vient en butée contre le côté intérieur (1B) de la protection latérale, ou est à une courte distance de celui-ci, typiquement de 1 à 5 cm.

3. Le dispositif de sécurité selon la revendication 1, **caractérisé en ce que** la distance mutuelle (X) entre lesdits éléments à ressort (3) est dans la plage allant de 5 à 20 cm, plus préférablement de 9 à 15 cm.

4. Le dispositif de sécurité selon la revendication 3, **caractérisé en ce que** la hauteur (h_{f}) des éléments à ressort (3) se situe dans la plage allant de 5 à 100 cm, plus préférablement de 10 à 70 cm, et de manière la plus préférée de 15 à 25 cm.

5. Le dispositif de sécurité selon la revendication 2, **caractérisé en ce que** ladite protection latérale (10) est un panneau en caoutchouc renforcé ayant une épaisseur (T) située dans la plage allant de 0,3 à 3 cm, plus préférablement de 0,5 à 2 cm, et de façon la plus préférée de 0,6 à 1,5 cm.

6. Le dispositif de sécurité selon la revendication 1, **caractérisé en ce que** lesdits dispositif de protection latérale (10) et éléments à ressort (3) sont montés sur le châssis du véhicule (F), ledit châssis comprenant un dispositif de fixation (2), de préférence sous la forme d'une poutre en L, ledit dispositif de fixation (2) comprenant une partie de montage (20) horizontale pour le montage des éléments à ressort (3) et une partie de montage (21) verticale pour le montage de la protection latérale (10).

7. Le dispositif de sécurité selon la revendication 1, **caractérisé en ce que** le dispositif de sécurité (1) comprend un dispositif de fixation (2), de préférence sous la forme d'une poutre en L, qui est adaptée pour fixer le dispositif de sécurité (1) au / sur le véhicule (F), ledit dispositif de fixation (2) comprenant une partie de montage (20) horizontale pour le montage du dispositif de sécurité (1) contre le châssis du véhicule et le montage des éléments à ressort (3) et une partie de montage (21) verticale pour le montage de la protection latérale (10).

8. Le dispositif de sécurité selon la revendication 6 ou la revendication 7, **caractérisé en ce que** la protection latérale (10) est montée sur le côté extérieur (21 A) de la partie de montage verticale, les éléments à ressort (3) sont montés sur le côté inférieur (20B) de la partie horizontale à l'intérieur de la partie de montage (21) verticale, la fixation (30, 6, 4) des éléments à ressort au côté inférieur (20B) de la partie horizontale étant protégée à l'intérieur de la partie de montage (21) verticale.

9. Le dispositif de sécurité selon la revendication 1, **caractérisé en ce que** lesdits éléments à ressort (3) sont remplaçables.

10. Le dispositif de sécurité selon la revendication 6 ou la revendication 7, **caractérisé en ce que** lesdits éléments à ressort (3) sont constitués par des ressorts hélicoïdaux (3) dont les extrémités supérieures (34) sont montées sur le côté inférieur (20B) de la partie de montage horizontale par des moyens de montage (4, 6).

11. Le dispositif de sécurité selon la revendication 10, **caractérisé en ce que** l'extrémité supérieure (34) dudit ressort hélicoïdal, et de préférence également son extrémité inférieure (31), est usinée plate, **en ce que** lesdits moyens de montage (4, 6) comprennent une rondelle (4) qui est disposée entre la première spire (30) et la deuxième spire (33) du ressort hélicoïdal, ladite rondelle (4) étant fixée au côté inférieur (20B) de la partie de montage horizontale par une vis (6).

12. Le dispositif de sécurité selon la revendication 2, **caractérisé en ce que** le dispositif de sécurité (1) s'étend entre les roues avant (8) et arrière (9) du véhicule, **en ce que** l'extrémité avant (11) du dispositif de sécurité (1) est située immédiatement en arrière de ladite roue avant (8) dans la zone située en arrière de la bande de roulement (80) de la roue avant (8), **en ce qu'**une extrémité arrière (12) du dispositif de sécurité (1) est située immédiatement en avant de ladite roue arrière (9), en étant alignée avec la paroi latérale extérieure (90) de la roue arrière (9) ou située à l'extérieur de celle-ci, de sorte que le côté extérieur (1A) de la protection latérale, à l'extrémité arrière (12) du dispositif de sécurité (1), s'étend bord à bord avec la paroi latérale extérieure (90) de la roue arrière (9) ou située à l'extérieur de celle-ci.

13. Le dispositif de sécurité selon la revendication 1, **caractérisé en ce qu'**un bord inférieur (13) de ladite protection latérale (10) est disposé à une distance du sol située dans la plage allant de 1 à 5 cm et / ou **en ce qu'**une extrémité inférieure (31) dudit élément à ressort (3) est disposé à une distance du sol située dans la plage allant de 1 à 15 cm.
